# EUROPEAN PATENT SPECIFICATION

(11) **EP 1 147 980 B1**
(45) Date of publication and mention of the grant of the patent: **18.08.2004**
(21) Application number: 01109338.2
(22) Date of filing: 12.04.2001
(51) Int. Cl.: B63B 9/06, B23K 37/053

(54) **Device and method for assembling reinforcements on a shell, particularly for a submarine**
Vorrichtung und Verfahren zum Verbinden von Verstärkungsrippen an eine Schale, insbesondere für ein Unterseeboot
Dispositit et méthode pour assembler des renforcements sur une coque, en particulier pour des sous-marins

(30) Priority: 20.04.2000 IT TV000045
(43) Date of publication of application: 24.10.2001
(73) Proprietor: FINCANTIERI CANTIERI NAVALI ITALIANI S.p.A., I-34121 Trieste (IT)
(72) Inventor: Raggi, Claudio, 54033 Carrara (Massa Carrara) (IT)
(74) Representative: Modiano, Guido, Dr.-Ing.

(56) References cited:
- DE-B- 1 109 286
- US-A- 4 223 202

## Description

The present invention relates to a device for assembling reinforcements on a shell, particularly adapted for building a submarine, and to the corresponding method for providing said assembly.

It is known that the outer hull of a submarine is assembled by sequentially joining, along a single longitudinal axis, a plurality of subassemblies which have a body having a cylindrical lateral surface and being internally empty.

Currently, these subassemblies are usually produced starting from plating, for example from two or more appropriately bent and sanded metal plates which are arranged around a fixed supporting structure for a reinforcement frame.

Such reinforcement frame is usually constituted by two or more circular ribs which advantageously have a T-shaped transverse cross-section and are adapted to increase considerably the rigidity and mechanical strength of the subassembly.

A typical supporting structure for the ribs is constituted by a central column being arranged so that its axis is in a vertical position and whose base is a set of radial spokes which has preset fixed dimensions, so as to define a selected diameter, said set of radial spokes having at its free ends a plurality of perimetric columns having also a vertical axis.

The vertical columns support a plurality of templates made of metal plate, which are arranged on a plurality of equidistant vertical planes and are adapted to support the ribs.

The curved plates, for example three in number, that constitute the plating are then placed against the supporting structure so that their lower peripheral edge is arranged in adapted seats formed in a footing proximate to the ground and is locked thereat for example by using appropriate first wedges.

Proximate to the upper peripheral edge of the plating and outside it, appropriate upper supports are provided being designed to keep the plates vertical, thus preventing outward movements of said edge.

One of the methods used to make the ribs adhere to the plating consists in acting on the first wedges so as to cause a deformation of the plates.

Then, by acting on adapted anchoring elements and second wedges arranged inside the supporting structure, the downward movement of each rib is produced, thus making such rib adhere to the plating as much as possible.

It is then possible to tack-weld the frame to the plating and then, after turning the subassembly so that its axis becomes horizontal, manual internal welding of the plates is performed together with external rewelding performed by using a submerged arc welding procedure.

The subassembly is completed by welding each rib to the external plating, for example by using two mutually opposite torches in a submerged arc.

One of the main drawbacks of this known method consists in that it is very labor-intensive and accordingly entails long times and high costs for the assembly of each subassembly.

Another drawback of said prior art method is that it requires manual welding inside the plating; such welding requires specialized labor and is lower in quality than automatic welding.

Another drawback is that X-ray inspection of the welds between the curved plates that compose the plating requires the provision of a groove a few millimeters deep to be filled subsequently, with a consequent additional loss in quality and time for positioning the X-ray plate.

Another disadvantage consists in that the succession of welds between the plates of the plating and between the plates and the frame, many of which are performed manually, lead to building-up considerable residual tensions.

Another drawback is that sometimes it is not possible to act on the anchoring elements and wedges in order to move the plates close enough to the ribs; if the gaps are more than a few millimeters wide, which width is conventionally estimated of three millimeters, on-site filling-in with material is necessary.

A device according to the preamble of claim 1 is known from US-A-42 23 202.

The aim of the present invention is therefore to solve the above-mentioned technical problems, eliminating the drawbacks of the cited known art, by providing a device and using a method which allow to achieve the simple and rapid assembly of an outer shell on internally associable reinforcements, requiring the smallest possible number of operations.

Within the scope of the this aim, an important object is to provide a method which is as cost-effective as possible both in terms of machine-tool work and in terms of labor use.

Another important object is to provide a method which has high standardization, thus reducing any costs due to additional work.

Another object is to provide a device which allows to use a shell produced by roller bending instead of turning yet does not thereby reduce the quality of the subassembly to be built.

Another object is to provide a device and a method which allow to obtain a subassembly which is as free as possible from internal residual tensions.

Another object is to provide a device which is structurally simple and has low manufacturing costs.

This aim, and these and other objects which will become better apparent hereinafter are achieved by a device for assembling reinforcements on a preformed shell according to claim 1.

The invention further concerns the method of independent claim 9.

Further characteristics and advantages of the invention will become better apparent from the detailed description of a particular embodiment thereof, illustrated only by way of non-limitative example in the accompanying drawings, wherein:

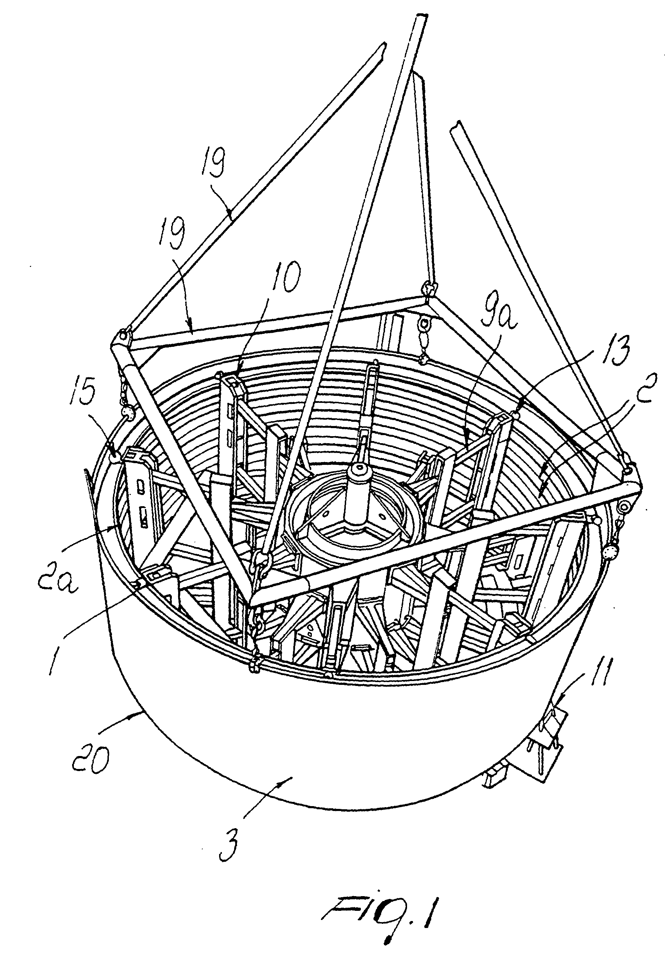

Figure 1 is a top perspective view of a supporting device for reinforcements during assembly to a shell lowered from above;

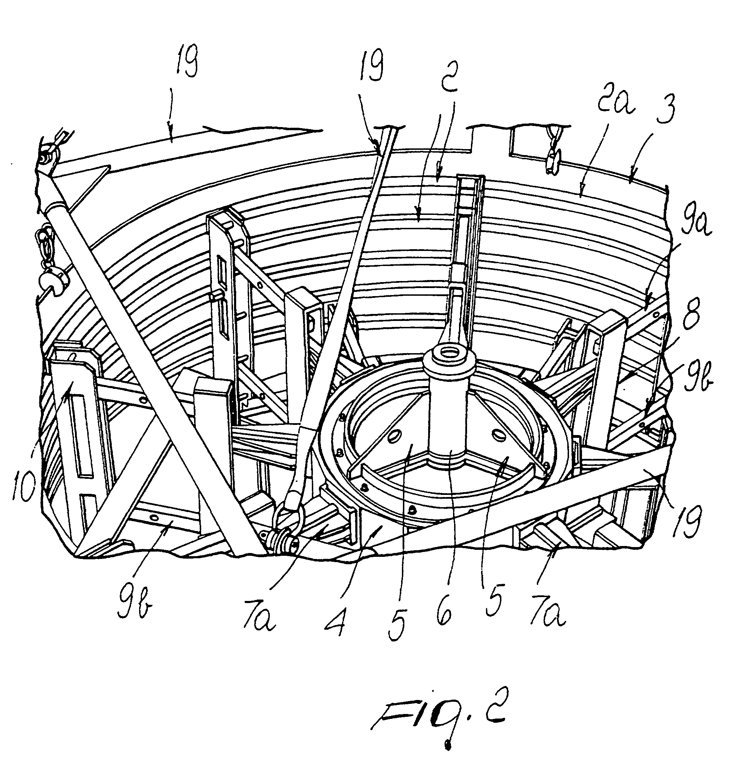

Figure 2 is a top perspective view of a detail of Figure 1;

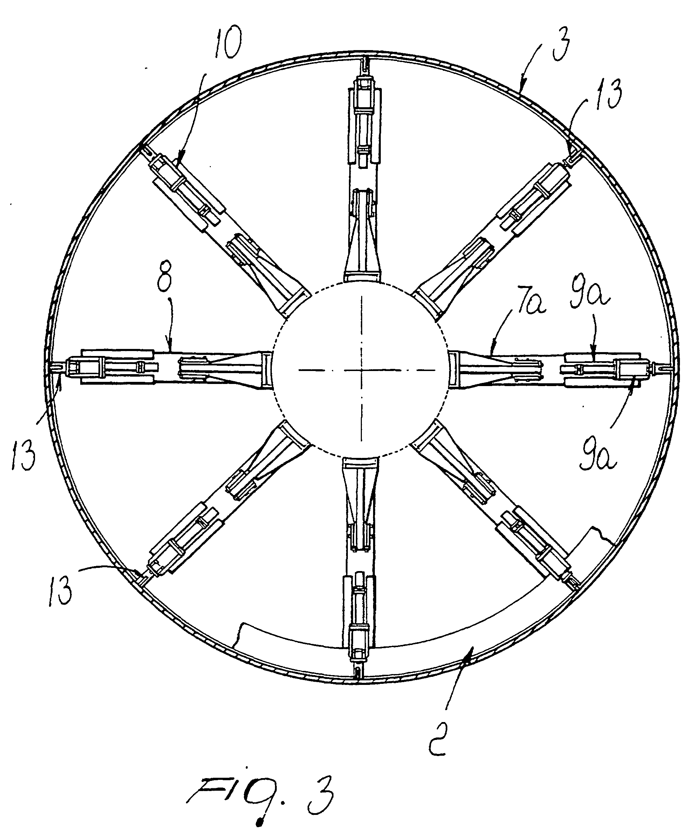

Figure 3 is a plan view of the supporting device for the reinforcements after assembly to the shell;

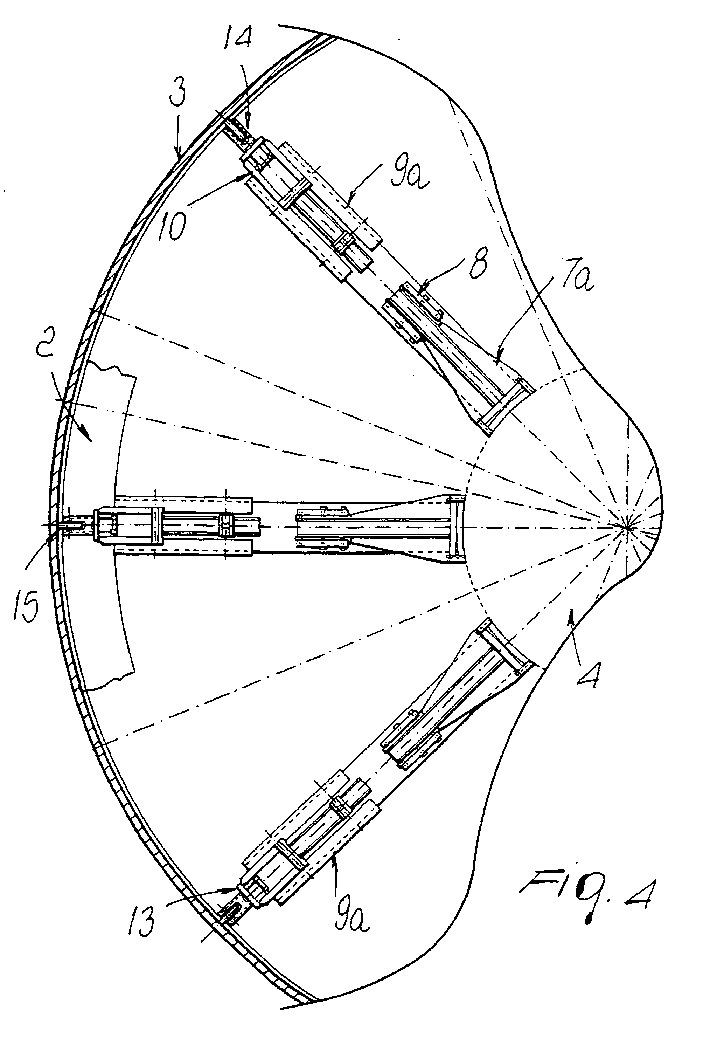

Figure 4 is a plan view of a detail of Figure 3;
Figure 5 is a side view of the supporting device for the reinforcements after assembly to the shell;

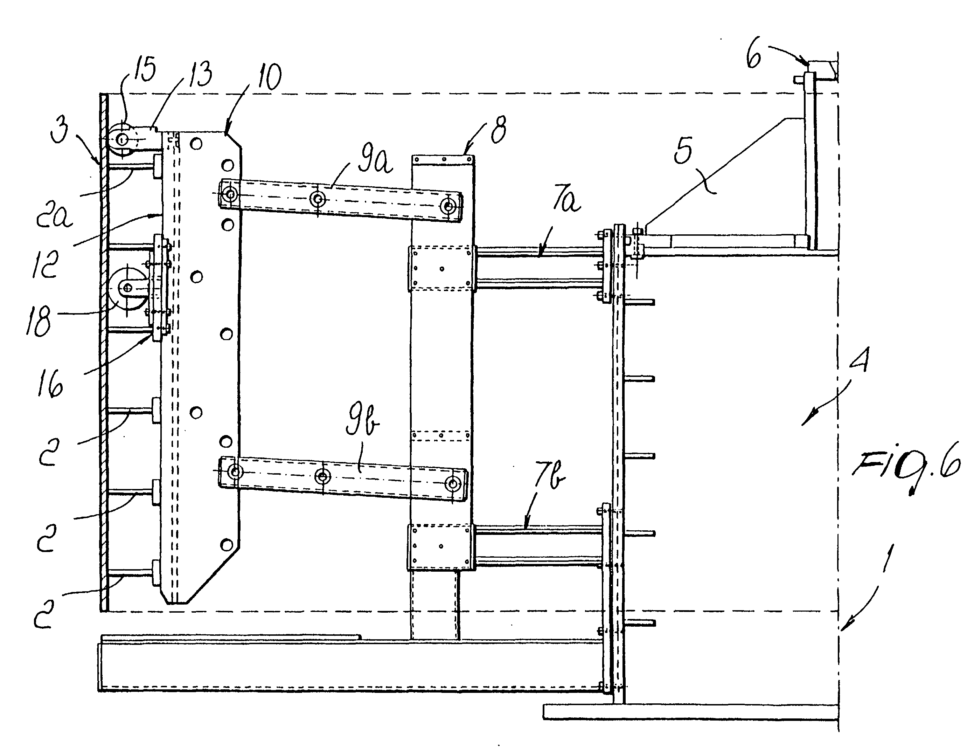

Figure 6 is a side view of part of Figure 5;

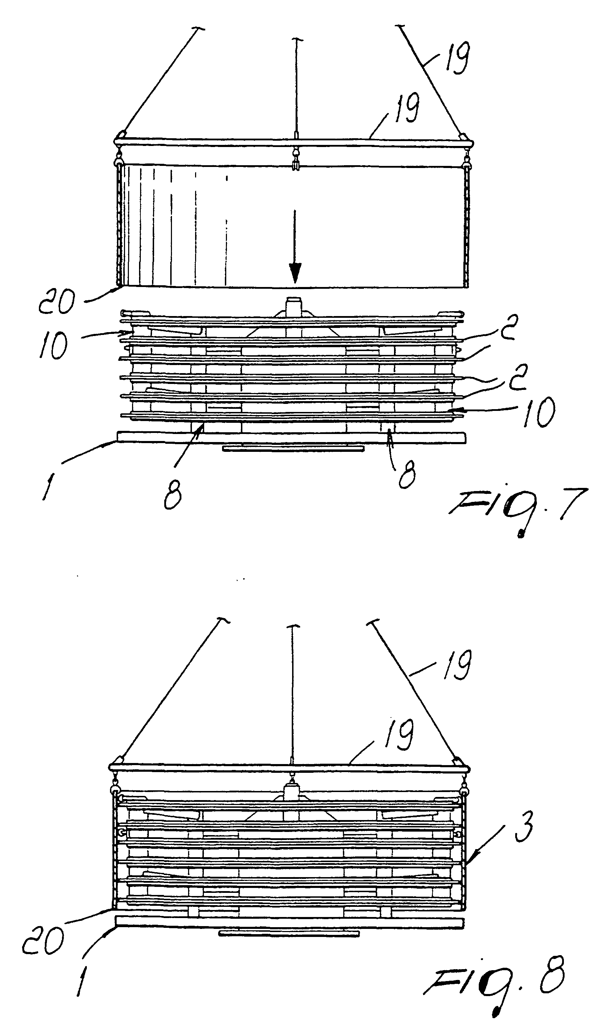

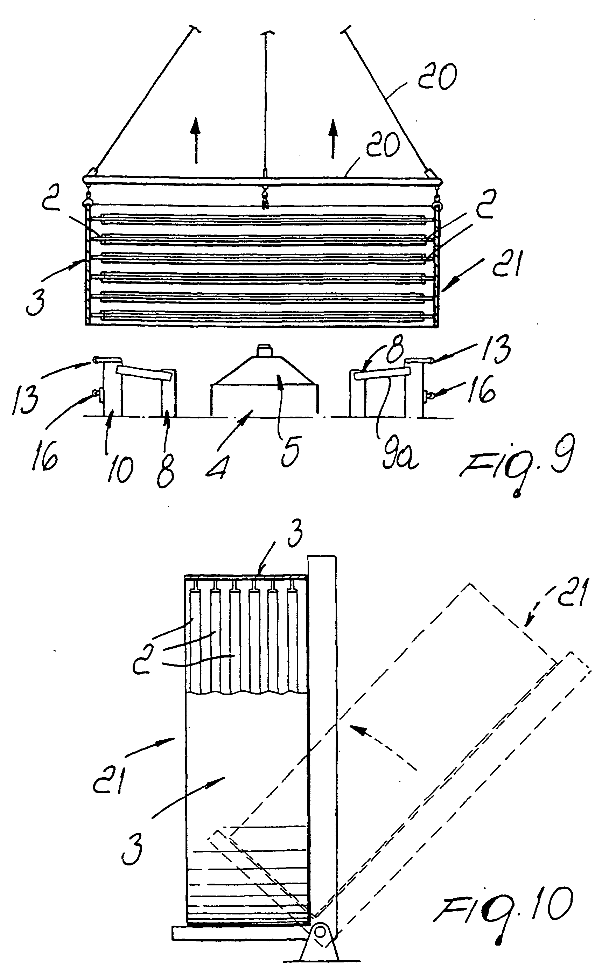

Figures 7 and 8 are side views of the supporting device for the reinforcements respectively before and after assembly to the shell;
Figures 9 and 10 are side views of the shell welded to the reinforcements while being respectively raised from the device and tipped vertically;

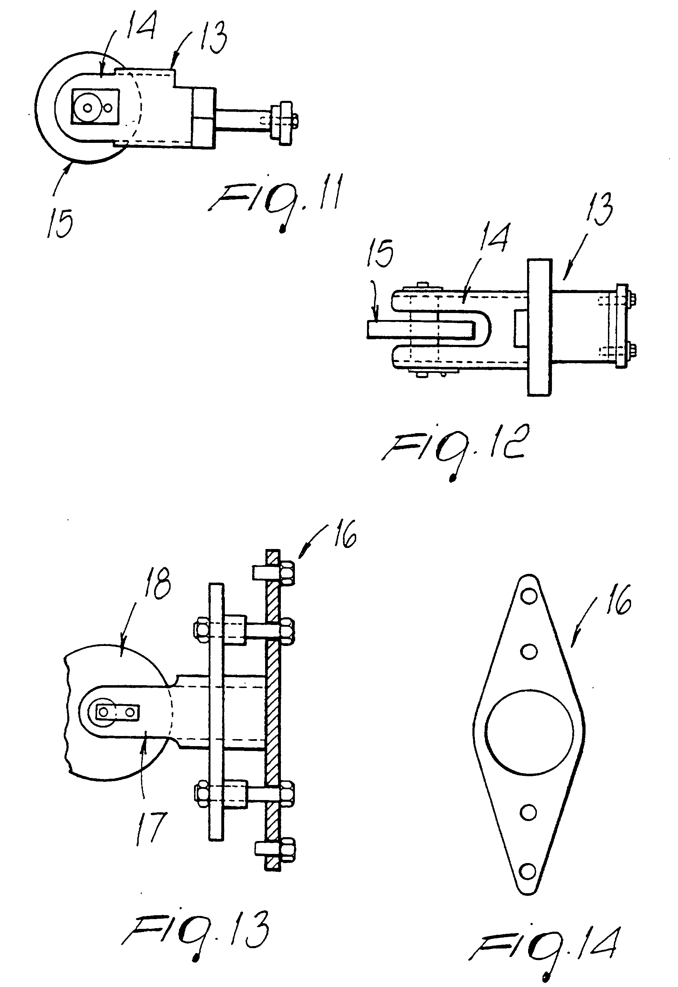

Figures 11 and 12 are a side view and a top view of first sliding means;
Figures 13 and 14 are a sectional side view and a front view of second sliding means.

With reference to the figures, reference numeral 1 designates a device for assembling two or more reinforcements or ribs, six in this embodiment, which are generally designated by the reference numeral 2, to a cylindrical shell 3.

Said device 1 comprises a central body, designated by the reference numeral 4, which is advantageously cylindrical and with which a plurality of plates 5 are associated at one end; said plates are advantageously triangular and provide a connection to a central shaft, designated by the reference numeral 6, for the engagement of a tipping machine, not shown in the figure.

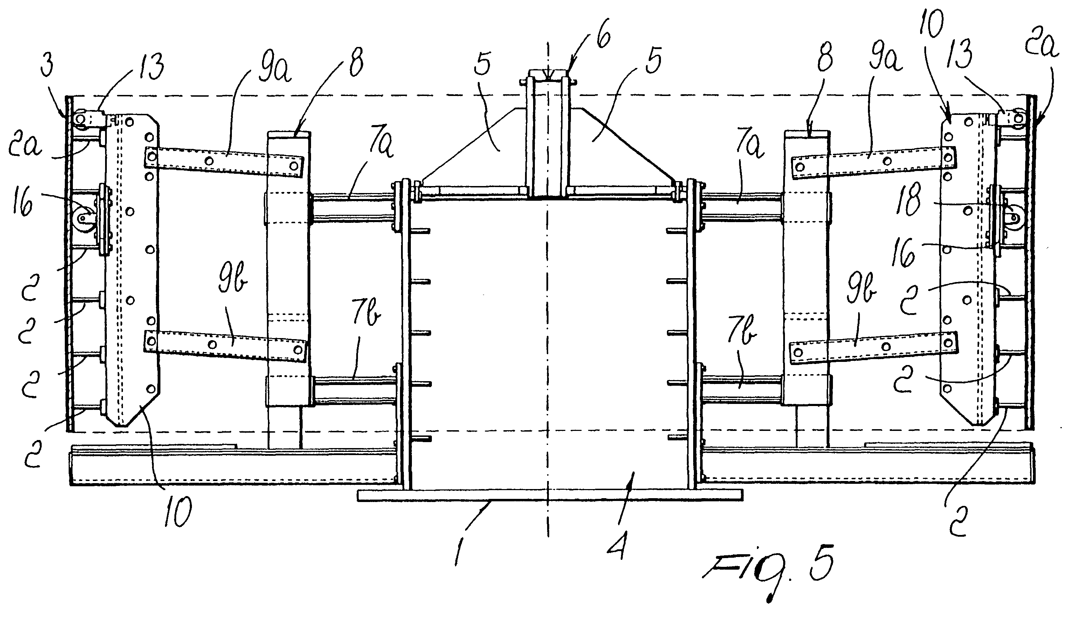

Eight pairs of first arms protrude radially from said central body 4, are stacked in pairs and are designated by the reference numerals 7a and 7b according to their arrangement, which in Figure 5 is respectively an upper arrangement and a lower arrangement.

The pairs of first arms 7a and 7b are adapted to connect said central body 4 to eight respective first uprights, generally designated by the reference numeral 8; two second arms, designated by the reference numerals 9a and 9b, are rotatably associated with each one of said uprights in a radial direction opposite to said pair of first arms 7a and 7b.

The free ends of each pair of second arms 9a and 9b are rotatably connected to a second upright, designated by the reference numeral 10, which is parallel to said first uprights 8, so as to constitute respective articulated quadrilaterals, so as to be able to vary, advantageously by way of appropriate actuators of a known type, such as for example pneumatic elements, the distance of the second uprights 10 from the central body 4.

Said distance can be changed also by using, as pairs of first arms 7a and 7b, pneumatic or hydraulic cylinders, which advantageously can be extended by means of elastically deformable elements contained therein which act in contrast with the extension of said cylinders on the part of the pneumatic or hydraulic circuit.

In this manner, the device 1, in a first step in which it is advantageously arranged along a horizontal axis, can be appropriately adjusted as regards its dimensions, so that it can be inserted into said ribs 2, which have an annular shape with a cross-section which is advantageously rectangular or triangular or T-shaped or C-shaped.

In a subsequent second step, once insertion has been completed, the pairs of first arms 7a and 7b are extended, by cutting-off the pneumatic or hydraulic circuit, so as to allow the elastically deformable elements included in each one of said arms to make said second uprights 10 abut against the internal surface of said ribs 2.

In a third step, the device is turned so as to arrange its longitudinal axis vertically, resting it on adapted supporting blocks, designated by the reference numeral 11.

In this third step, adapted first sliding elements 13 which protrude radially outward are detachably coupled to the outer surface, designated by the reference numeral 12, of said second uprights 10 proximate to their upper end, or directly to the upper rib, designated by the reference numeral 2a.

The first sliding elements 13 are detachably coupled, advantageously by way of a system of abutments and retainers, and have, at their free end, a first fork, designated by the reference numeral 14, for the connection of a first spacer wheel 15 which can be arranged slightly beyond the outer edge of said ribs 2.

Second sliding elements, designated by the reference numeral 16, are detachably coupled proximate to the other ribs, and therefore in a downward position with respect to said first sliding elements 13; said second sliding elements also protrude radially outward and are constituted by a second fork, designated by the reference numeral 17, for the connection of a second spacer wheel 18 which also can be positioned slightly beyond the outer edge of said ribs 2.

In a fourth subsequent step, the shell 3, which is already pre-obtained as a single body advantageously by roller bending, is arranged above the device 1, for example by using a lifting rig, designated by the reference numeral 19, and from there it is lowered until its lower peripheral edge 20 rests on said first sliding elements 13.

The shell 3, in a fifth step, is lowered further, sliding on said first sliding elements, which act as guiding and centering elements for said shell 3 which, by descending, reaches said second sliding elements, being located proximate to the ribs 2 placed after said upper rib 2a.

In this fifth step, the entire device 1, including the first and second sliding means 13 and 16, by being more rigid than the shell 3, subjects the shell, which often is not perfectly circular due to imperfections and defects produced during or after its manufacture, to a deformation in a radial direction, so as to make it approximately perfectly concentric to said ribs 2, the maximum distance between said shell 3 and said ribs 2 never being greater than the maximum limit for performing an automatic weld, for example of the submerged-arc type.

The energy for performing this deformation of the shell 3, and thus make it as concentric as possible to said ribs 2, is simply provided by the force of gravity, which acts on the mass of said shell 3 during the fifth insertion step.

In a subsequent sixth step, the insertion of said shell 3 in the device 1 is completed, thus allowing to proceed with the welding of each one of said ribs 2 to the internal surface of the shell 3.

A seventh and final step provides for the shortening of said arms, so as to be able to lift, by means of said lifting rig 19, the shell 3, which is reinforced internally by the presence of said ribs 2 so as to form a subassembly, designated by the reference numeral 21.

Said subassembly 21 is then turned so that its axis is horizontal for the subsequent processes of assembling multiple subassemblies.

It has thus been observed that the invention has achieved the intended aim and objects, a device and a method having been devised which allow to provide simple and quick assembly of an outer shell on reinforcements which can be associated internally.

Such method, by requiring a small number of operations, is also cost-effective not only from the point of view of the use of labor but also as regards machine-tool processes.

The importance of said method for assembling the reinforcements to a shell is also evident in the possibility to perform only automatic welds, for example of the submerged-arc type, which are much faster and qualitatively better than the manual welds entailed by the known manufacturing method.

This advantage is acquired by the fact that it is possible to obtain optimum concentricity of the shell with respect to the ribs although the shell can be provided for example by simple roller bending, without the need for a subsequent step of turning the internal surface.

The invention is of course susceptible of numerous modifications and variations, all of which are within the scope of the appended claims.

The materials used, as well as the dimensions of the individual components of the invention, may of course be more pertinent according to specific requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for assembling reinforcements on a preformed shell (3), particularly for a submarine, comprising a substantially cylindrical central body (4) which is radially provided with a plurality of arms (7a,7b) for connection to two or more substantially annular reinforcements (2), said arms being selectively movable in a radial direction, **characterized in that** said arms (7a,7b) have, at their free ends, first sliding elements (13) for supporting and centering said shell (3) and second sliding elements (16) for guiding said shell (3) into said reinforcements (2).

2. The device according to claim 1, with said reinforcements or ribs (2) being annular and having a cross-section which is substantially rectangular or triangular or T-shaped or C-shaped, **characterized in that** the device comprises a central body (4) with which a plurality triangular plates (5) are associated at one end for connection to a central shaft (6) for engagement with a tipping machine.

3. The device according to claims 1 and 2, **characterized in that** said arms (7a,7b) are constituted by at least three pairs of first arms (7a,7b) which are stacked in pairs according to their position, which is respectively upper or lower, and are adapted to connect said central body (4) to a corresponding number of first uprights (8), two second arms (9a,9b) being rotatably associated with each one of said uprights (8) in a radial direction opposite to said pair of first arms (7a,7b).

4. The device according to claims 1 and 3, **characterized in that** the free ends of each pair of second arms (9a,9b) are rotatably connected to a respective second upright (10) which is parallel to said first upright (8), so as to constitute respective articulated quadrilaterals, able to vary, by way of appropriate actuators, the distance of said second uprights (10) from said central body.

5. The device according to claims 1 and 4, **characterized in that** the first arms (7a,7b) are constituted by pneumatic or hydraulic cylinders, which can be extended by way of elastically deformable elements contained therein which contrast the extension of said cylinders actuated by the pneumatic or hydraulic circuit, so as to be able to vary the distance of said second uprights (10) from said central body (4).

6. The device according to claims 1 and 5, **characterized in that** it provides for the detachable connection, by means of a system of abutments and retainers, of said first sliding elements (13), which protrude radially outward, to the outer surface of said second uprights (10), proximate to their upper end, or directly to the topmost one of said reinforcements or ribs (2).

7. The device according to claims 1 and 6, **characterized in that** said first sliding elements (13) have, at their free end, a first connecting fork (14) for a first spacer wheel (15) which can be arranged slightly beyond the outer edge of said ribs (2).

8. The device according to claims 1 and 7, **characterized in that** second sliding elements (16) are detachably coupled proximate to said ribs (2) arranged below the topmost one and below said first sliding elements (13), protrude radially outward and are constituted by a second fork (17) for the connection of a second spacer wheel (18) which can be arranged slightly beyond the outer edge of said ribs (2).

9. A method for assembling reinforcements on a shell, particularly for a submarine, by means of a device constituted by a central body being cylindrical and being radially provided with a plurality of arms which are selectively and radially movable, **characterized in that** it comprises, even in a different sequence, the following steps:
a first step, in which said device, preferably arranged so that its longitudinal axis is horizontal, is arranged within two or more reinforcements or ribs which are advantageously annular, said arms being set beforehand to their minimum length;
a second step, in which said arms are extended until they make contact with said reinforcements or ribs, adapted elastically deformable and suitably preloaded elements acting on said arms so as to compress the internal surface of said ribs;
a third step, in which said device is rotated, for arrangement thereof with its longitudinal axis vertical, and is lowered onto appropriate supporting blocks, said arms having, at their free ends, first and second sliding elements which protrude radially slightly beyond the outer edge of said ribs;
a fourth step, in which said shell, already pre-obtained as a single body, advantageously by roller bending and automatic welding, is placed, by way of a lifting rig, above said device, and is lowered from there until its lower peripheral edge rests on said first sliding elements, which are advantageously arranged at the upper peripheral edge of said device;
a fifth step, in which said shell is lowered further, sliding on said first sliding elements, until it reaches said second sliding elements;
a sixth step, in which the insertion of said shell in said device is completed, thus allowing to tack-weld each one of said ribs to said shell;
a seventh step, in which said arms are set to their minimum length so as to be able to lift said shell, which is reinforced internally by the presence of said ribs, and tip the reinforcement shell into a position in which its axis is horizontal.

10. The method according to claim 9, **characterized in that** in said second step, once arrangement of the device has been completed, the extension of said arms occurs by way of the cutting-off of the pneumatic or hydraulic circuit of said pairs of first arms, so as to allow said elastically deformable elements included in each one of said arms to make said second uprights abut against the internal surface of said ribs.

11. The method according to claim 9, **characterized in that** during said third step said first sliding elements are detachably coupled to the outer surface of said uprights, proximate to their upper end, or directly to the topmost one of said ribs, so as to protrude radially outward, slightly beyond the outer edge of said ribs.

12. The method according to claim 9, **characterized in that** in said third step said second sliding elements are detachably coupled to the outer surface of said uprights, in a downward position with respect to said first sliding elements, protruding radially outward slightly beyond the outer edge of said ribs.

13. The method according to claim 9, **characterized in that** in said fifth step said shell, by descending along said device, is appropriately centered and optionally deformed, so as to be concentric to said ribs, by way of said first and second sliding elements.

14. The method according to claim 9, **characterized in that** in said sixth step, the automatic welding is performed, preferably of the submerged-arc type, between each one of said ribs and the internal surface of said shell.

15. The method according to claim 9, **characterized in that** said seventh step comprises for the shortening of said arms by actuation of the pneumatic or hydraulic circuit of said first pair of arms, so as to release said shell, which is reinforced internally by the presence of said ribs so as to form a subassembly, from said device.

## Patentansprüche

1. Vorrichtung zum Montieren von Verstärkungen an einer vorgeformten Schale (3), insbesondere für ein Unterseeboot, mit einem im Wesentlichen zylindrischen zentralen Körper (4), der radial mit einer Vielzahl von Armen (7a, 7b) zum Verbinden mit zwei oder mehreren, im Wesentlichen ringförmigen Verstärkungen (2) vorgesehen ist, wobei die Arme selektiv in einer radialen Richtung beweglich sind, **dadurch gekennzeichnet, dass** die Arme (7a, 7b), an ihren freien Enden, erste Schiebeelemente (13) zum Stützen und Zentrieren der Schale (3) und zweite Schiebeelemente (16) zum Führen der Schale (3) in die Verstärkungen (2) haben.

2. Vorrichtung nach Anspruch 1, mit Verstärkungen oder Rippen (2), die ringförmig sind und einen Querschnitt besitzen, der im Wesentlichen rechteckig oder dreieckförmig oder T-förmig oder C-förmig ist, **dadurch gekennzeichnet, dass** die Vorrichtung einen zentralen Körper (4) aufweist, mit dem eine Vielzahl dreieckiger Platten (5) in Verbindung stehen, an einem Ende zum Verbinden mit einem zentralen Schaft (6), zum Zusammenwirken mit einer Kippmaschine.

3. Vorrichtung nach den Ansprüchen 1 und 2, **dadurch gekennzeichnet, dass** die Arme (7a, 7b) durch mindestens drei Paare von ersten Armen (7a, 7b) gebildet sind, die paarweise gestapelt sind, entsprechend deren Position, die jeweils höher oder tiefer ist, und vorgesehen sind, den zentralen Körper (4) mit einer korrespondierenden Anzahl von ersten Pfosten (8) zu verbinden, wobei zwei zweite Arme (9a, 9b) schwenkbar jedem der Pfosten (8) zugeordnet sind, in einer radialen Richtung entgegengesetzt dem Paar von ersten Armen (7a, 7b).

4. Vorrichtung nach den Ansprüchen 1 und 3, **dadurch gekennzeichnet, dass** die freien Enden jedes Paares von zweiten Armen (9a, 9b) schwenkbar mit einem entsprechenden zweiten Pfosten (10) verbunden sind, der parallel zum ersten Pfosten (8) ist, um so entsprechend gegliederte Vierecke zu bilden, mit der Fähigkeit, mittels geeigneter Betätigungsmittel, den Abstand der zweiten Pfosten (10) vom zentralen Körper zu verändern.

5. Vorrichtung nach den Ansprüchen 1 und 4, **dadurch gekennzeichnet, dass** die ersten Arme (7a, 7b) durch pneumatische oder hydraulische Zylinder gebildet sind, die mittels darin befindlicher elastisch deformierbarer Elemente gelängt werden können, die die Längung des Zylinders, der durch den pneumatischen oder hydraulischen Kreislauf beaufschlagt wird, kontrastieren, um so fähig zu sein, den Abstand der zweiten Pfosten (10) vom zentralen Körper (4) zu verändern.

6. Vorrichtung nach einem der Ansprüche 1 und 5, **dadurch gekennzeichnet, dass** für die demontierbare Verbindung der ersten Schiebeelemente (13) ein System von Widerlagern und Haltern vorgesehen ist, wobei die ersten Schiebeelemente radial nach außen vorstehen, zur äußeren Oberfläche der zweiten Pfosten (10), benachbart zu deren oberen Ende, oder direkt zur Obersten der Verstärkungen oder Rippen (2).

7. Vorrichtung nach den Ansprüchen 1 und 6, **dadurch gekennzeichnet, dass** die ersten Schiebeelemente (13), an deren freien Ende, eine erste Verbindungsgabel (14) für ein erstes Abstandsrad (15) haben, das geringfügig jenseits des äußeren Randes der Rippen (2) angeordnet werden kann.

8. Vorrichtung nach den Ansprüche 1 und 7, **dadurch gekennzeichnet, dass** das zweite Schiebeelemente (16) benachbart den Rippen (2) demontierbar gekoppelt sind sowie unterhalb der Obersten und unterhalb der ersten Schiebeelemente (13) angeordnet sind, die sich radial nach außen erstrecken und durch eine zweite Gabel (17) für die Verbindung eines zweiten Abstandsrads (18) gestaltet sind, das geringfügig jenseits des äußeren Randes der Rippen (2) angeordnet werden kann.

9. Verfahren zum Verbinden von Verstärkungen an einer Schale, insbesondere für ein Unterseeboot, mittels einer Vorrichtung, die durch einen zentralen Körper gebildet ist, der zylindrisch ist und radial mit einer Vielzahl von Armen versehen ist, die selektiv und radial beweglich sind, **dadurch gekennzeichnet, dass** es umfasst, sogar in verschiedener Abfolge, die folgenden Schritte:
einen ersten Schritt, bei dem die Vorrichtung, bevorzugt so angeordnet, dass deren Längsachse horizontal ist, innerhalb von zwei oder mehr Verstärkungen oder Rippen angeordnet wird, die vorteilhaft ringförmig sind, wobei die Arme zuvor auf deren minimale Länge eingestellt sind;
einen zweiten Schritt, bei dem die Arme ausgefahren werden, bis sie in Kontakt mit den Verstärkungen oder Rippen gelangen, wobei angepasste, elastisch deformierbare und geeignet vorbelastete Elemente auf die Arme einwirken, so dass sie die innere Oberfläche der Rippen pressen;
einen dritten Schritt, bei dem die Vorrichtung geschwenkt wird, zu deren Anordnung mit vertikal ausgerichteter Längsachse, und abgesenkt wird auf geeignete Trägeblöcke, wobei die Arme, an ihren freien Enden, erste und zweite Schiebeelemente aufweisen, die sich radial geringfügig jenseits der Außenkante der Rippen erstrecken;
ein vierter Schritt, bei dem die Schale, die bereits als einzelner Körper gebildet ist, vorteilhaft durch Rollenbiegen und automatisches Schweißen mittels eines Hubgerüsts oberhalb der Vorrichtung platziert wird, und von dort abgesenkt wird, bis deren untere Umfangskante auf den ersten Schiebeelementen ruht, die vorteilhaft an der oberen Umfangskante der Vorrichtung angeordnet sind;
einen fünften Schritt, bei dem die Schale weiter abgesenkt wird und dabei auf den ersten Schiebeelementen schiebt, bis sie die zweiten Schiebeelemente erreicht;
einen sechsten Schritt, bei dem das Einsetzen der Schale in die Vorrichtung abgeschlossen ist, und folglich es erlaubt, jede der Rippen mit der Schale heftzuschweißen;
einen siebten Schritt, bei dem die Arme auf deren minimale Länge eingestellt werden, um die Schale zu heben, die innen durch Anwesenheit der Rippen versteift ist, und Kippen der verstärkten Schale in eine Position, in der die Achse horizontal ist.

10. Verfahren nach Anspruch 9, **dadurch gekennzeichnet, dass** in einem zweiten Schritt, sobald die Anordnung der Vorrichtung erfolgt ist, die Längung der Arme mittels Abschalten des pneumatischen oder hydraulischen Kreislaufs des Paares von ersten Armen erfolgt, womit es den elastischen deformierbaren Elementen, die in jedem der Arme beinhaltet sind, möglich ist, die zweiten Ständer gegen die innere Oberfläche der Rippen anstoßen zu lassen.

11. Verfahren nach Anspruch 9, **dadurch gekennzeichnet, dass** während des dritten Schrittes die ersten Schiebeelemente demontierbar mit der äußeren Oberfläche der Ständer gekoppelt sind, benachbart zu derem oberen Ende, oder direkt mit dem obersten der Rippen, so dass sie sich radial nach außen erstrecken, geringfügig jenseits der äußeren Kante der Rippen.

12. Verfahren nach Anspruch 9, **dadurch gekennzeichnet, dass** beim dritten Schritt die zweiten Schiebeelemente demontierbar mit der äußeren Fläche der Ständer gekoppelt sind, in einer nach unten gerichteten Position bezüglich der ersten Schiebeelemente, sich erstreckend radial nach außen geringfügig jenseits der äußeren Kante der Rippen.

13. Verfahren nach Anspruch 9, **dadurch gekennzeichnet, dass** beim fünften Schritt die Schale, durch Absenken entlang der Vorrichtung, geeignet zentriert und optional deformiert wird, so dass sie bezüglich der Rippen konzentrisch wird, mittels der ersten und zweiten Schiebeelemente.

14. Verfahren nach Anspruch 9, **dadurch gekennzeichnet, dass** beim sechsten Schritt das automatische Schweißen ausgeführt wird, vorzugsweise des Unterpulverschweiß-Typs, zwischen jeder der Rippen und der inneren Oberfläche der Schale.

15. Verfahren nach Anspruch 9, **dadurch gekennzeichnet, dass** der siebte Schritt das Kürzen der Arme durch Betätigung des pneumatischen oder hydraulischen Kreislaufs des ersten Paares von Armen umfasst, um so die Schale von der Vorrichtung zu lösen, wobei die Schale innen durch Anwesenheit der Rippen verstärkt ist, um eine Vormontageeinheit zu bilden.

## Revendications

1. Dispositif pour l'assemblage de renforcements sur une coque préformée (3), en particulier pour un sous-marin, comprenant un corps central sensiblement cylindrique (4) qui est muni, de façon radiale, d'une pluralité de bras (7a, 7b) pour une connexion avec deux ou plusieurs renforcements sensiblement annulaires (2), lesdits bras étant mobiles de façon sélective dans une direction radiale, **caractérisé en ce que** lesdits bras (7a, 7b) ont à leurs extrémités libres des premiers éléments coulissants (13) pour supporter et centrer ladite coque (3) et des seconds éléments coulissants (16) pour guider ladite coque (3) dans lesdits renforcements (2).

2. Dispositif selon la revendication 1, lesdits renforcements ou nervures (2) étant annulaires et possédant une section transversale qui est sensiblement rectangulaire ou triangulaire ou en forme de T ou C, **caractérisé en ce que** le dispositif comprend un corps central (4) auquel sont associées plusieurs plaques triangulaires (5) à une extrémité pour une connexion avec un arbre central (6) pour un engagement avec une machine de basculement.

3. Dispositif selon les revendications 1 et 2, **caractérisé en ce que** lesdits bras (7a, 7b) sont constitués par au moins trois paires de premiers bras (7a, 7b) qui sont empilés par paires selon leur position qui est respectivement supérieure ou inférieure, et sont prévus pour connecter ledit corps central (4) sur un nombre correspondant de premiers montants (8), deux seconds bras (9a, 9b) étant associés en rotation à chacun desdits montants (8) dans une direction radiale opposée à ladite paire de premiers bras (7a, 7b).

4. Dispositif selon les revendications 1 et 3, **caractérisé en ce que** les extrémités libres de chaque paire de seconds bras (9a, 9b) sont connectées, de façon rotative, à un second montant respectif (10) parallèle audit premier montant (8) de façon à constituer des quadrilatères articulés respectifs pouvant faire varier par l'intermédiaire d'actionneurs adaptés la distance séparant lesdits seconds montants (10) dudit corps central.

5. Dispositif selon les revendications 1 et 4, **caractérisé en ce que** les premiers bras (7a, 7b) sont constitués par des cylindres pneumatiques ou hydrauliques pouvant être étendus par l'intermédiaire d'éléments élastiquement déformables contenus à l'intérieur s'opposant à l'extension desdits cylindres actionnés par le circuit pneumatique ou hydraulique de façon à faire varier la distance desdits seconds montants (10) dudit corps central (4).

6. Dispositif selon les revendications 1 et 5, **caractérisé en ce qu'**il assure la connexion amovible au moyen d'un système de butées et d'organes de retenue desdits premiers éléments coulissants (13) dépassant radialement vers l'extérieur sur la surface externe desdits seconds montants (10) près de leur extrémité supérieure ou directement sur le plus élevé desdits renforcements ou nervures (2).

7. Dispositif selon les revendications 1 et 6, **caractérisé en ce que** lesdits premiers éléments coulissants (13) possèdent à leur extrémité libre une première fourchette de connexion (14) pour un premier galet d'entretoise (15) pouvant être disposé légèrement au-delà du bord externe desdites nervures (2).

8. Dispositif selon les revendications 1 et 7, **caractérisé en ce que** des seconds éléments coulissants (16) sont couplés, de façon amovible, près desdites nervures (2) disposées en dessous du plus élevé et en dessous desdits premiers éléments coulissants (13), dépassent radialement vers l'extérieur et sont constitués d'une seconde fourchette (17) pour la connexion d'un second galet d'entretoise (18) pouvant être disposé légèrement au-delà du bord externe desdites nervures (2).

9. Procédé d'assemblage de renforcements sur une coque, en particulier pour un sous-marin, au moyen d'un dispositif constitué d'un corps central cylindrique et muni, de façon radiale, d'une pluralité de bras qui sont mobiles de façon sélective et radiale, **caractérisé en ce qu'**il comprend, même selon une séquence différente, les étapes suivantes :
- une première étape selon laquelle ledit dispositif agencé, de préférence, de telle façon que son axe longitudinal soit horizontal, est agencé à l'intérieur de deux ou plusieurs renforcements ou nervures qui sont de façon avantageuse annulaires, lesdits bras étant réglés auparavant à leur longueur minimale ;
- une seconde étape selon laquelle lesdits bras sont étendus jusqu'à ce qu'ils entrent en contact avec lesdits renforcements ou nervures, prévus déformables de façon élastique et des éléments précontraints, de façon adaptée, agissant sur lesdits bras afin de comprimer la surface interne desdites nervures ;
- une troisième étape selon laquelle ledit dispositif est tourné pour un agencement selon son axe longitudinal vertical et est abaissé sur des blocs adaptés de support, lesdits bras possédant à leurs extrémités libres des premiers et seconds éléments coulissants dépassant radialement légèrement au-delà du bord externe desdites nervures ;
- une quatrième étape selon laquelle ladite coque obtenue auparavant sous la forme d'un corps unitaire, de façon avantageuse par roulage et soudage automatique, est placée par l'intermédiaire d'une installation de levage au-dessus dudit dispositif et est abaissée jusqu'à ce que son bord inférieur de périphérie repose sur lesdits premiers éléments coulissants qui sont disposés, de façon avantageuse, sur le bord supérieur de périphérie dudit dispositif ;
- une cinquième étape selon laquelle ladite coque est abaissée de plus, coulissant sur lesdits premiers éléments coulissants, jusqu'à ce qu'elle atteigne lesdits seconds éléments coulissants ;
- une sixième étape selon laquelle l'insertion de ladite coque dans ledit dispositif est terminée, permettant ainsi de souder par points chacune desdites nervures sur ladite coque ; et
- une septième étape selon laquelle lesdits bras sont réglés à leur longueur minimale afin de pouvoir soulever ladite coque qui est renforcée, de façon interne, par la présence desdites nervures et de basculer la coque de renforcement dans une position où son axe est horizontal.

10. Procédé selon la revendication 9, **caractérisé en ce que** lors de ladite seconde étape, une fois l'agencement du dispositif achevé, l'extension desdits bras a lieu via la coupure du circuit pneumatique ou hydraulique desdites paires de premiers bras afin de permettre auxdits éléments déformables élastiquement, inclus dans chacun desdits bras, d'amener lesdits seconds montants en butée contre la surface interne desdites nervures.

11. Procédé selon la revendication 9, **caractérisé en ce que** lors de ladite troisième étape, lesdits premiers éléments coulissants sont couplés, de façon amovible, à la surface externe desdits montants proches de leur extrémité supérieure ou directement sur la plus élevée desdites nervures de façon à dépasser radialement vers l'extérieur légèrement au-delà du bord externe desdites nervures.

12. Procédé selon la revendication 9, **caractérisé en ce que** lors de ladite troisième étape, lesdits seconds éléments coulissants sont couplés, de façon amovible, à la surface externe desdits montants dans une position vers le bas par rapport auxdits premiers éléments coulissants dépassant radialement vers l'extérieur légèrement au-delà du bord externe desdites nervures.

13. Procédé selon la revendication 9, **caractérisé en ce que** lors de ladite cinquième étape, ladite coque en descendant le long dudit dispositif est centrée, de façon adaptée et déformée, en option afin d'être concentrique auxdites nervures par l'intermédiaire desdits premiers et seconds éléments coulissants.

14. Procédé selon la revendication 9, **caractérisé en ce que** lors de ladite sixième étape, le soudage automatique est effectué, de préférence du type à arc sous flux en poudre, entre chacune desdites nervures et la surface interne de ladite coque.

15. Procédé selon la revendication 9, **caractérisé en ce que** ladite septième étape comprend le raccourcissement desdits bras par actionnement du circuit pneumatique ou hydraulique de ladite première paire de bras afin de libérer ladite coque qui est renforcée, de façon interne, par la présence desdites nervures afin de former un sous-ensemble à partir du dispositif.
